(19)

Europäisches
Patentamt
European
Patent Office
Office européen
des brevets

(11) **EP 4 082 991 A1**

(12) **EUROPEAN PATENT APPLICATION**
published in accordance with Art. 153(4) EPC

(43) Date of publication:
**02.11.2022 Bulletin 2022/44**

(21) Application number: **20905831.2**

(22) Date of filing: **25.12.2020**

(51) International Patent Classification (IPC):
**C04B 35/488** (2006.01)  **A61C 5/70** (2017.01)
**A61C 13/08** (2006.01)

(52) Cooperative Patent Classification (CPC):
**A61C 5/70; A61C 13/08; C04B 35/488**

(86) International application number:
**PCT/JP2020/048954**

(87) International publication number:
**WO 2021/132644 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **26.12.2019 JP 2019236127**

(71) Applicant: **Kuraray Noritake Dental Inc.
Kurashiki-shi, Okayama 710-0801 (JP)**

(72) Inventors:
- **KATO Shinichiro
  Miyoshi-shi, Aichi 470-0293 (JP)**
- **ITO Yoshihisa
  Miyoshi-shi, Aichi 470-0293 (JP)**
- **NIWA Takahiro
  Miyoshi-shi, Aichi 470-0293 (JP)**

(74) Representative: **D Young & Co LLP
120 Holborn
London EC1N 2DY (GB)**

(54) **PRODUCTION METHOD FOR WORKABLE ZIRCONIA COMPOSITE SINTERED BODY, RAW MATERIAL COMPOSITION FOR WORKABLE ZIRCONIA COMPOSITE SINTERED BODY, AND WORKABLE ZIRCONIA COMPOSITE CALCINED BODY**

(57)    The present invention provides a method that enables fabrication of a machinable zirconia composite sintered body that is machinable in a sintered state while maintaining properties suited for dental use, in a shorter time than it is possible with conventional methods. The present invention relates to a method for producing a machinable zirconia composite sintered body, comprising the steps of: fabricating a molded body with a raw material composition that comprises 78 to 95 mol% of $ZrO_2$ and 2.5 to 10 mol% of $Y_2O_3$, and 2 to 8 mol% of $Nb_2O_5$ and/or 3 to 10 mol% of $Ta_2O_5$, and in which $ZrO_2$ predominantly comprises a monoclinic crystal system; and sintering the molded body.

EP 4 082 991 A1

**Description**

TECHNICAL FIELD

The present invention relates to a method of production of a machinable zirconia composite sintered body.

BACKGROUND ART

The dental CAD/CAM system is a technology available in dentistry to make a dental prosthesis to be installed in the oral cavity of a patient, whereby silicate glass-a highly translucent material with excellent aesthetics-or a high-strength ceramic material such as zirconia is worked into a shape that fits the affected area of a patient's tooth, and fired into the product dental prosthesis. In the case of zirconia, dental zirconia is used for this purpose. Earlier types of dental zirconia had high strength but were very opaque in quality. In response to demands from patients, today's dental zirconia has a level of translucency comparable to that of natural teeth, and fabrication of all-zirconia dental prostheses is now more widely practiced.

There is also a demand for faster fabrication of dental prostheses, and it is becoming increasing popular to more conveniently fabricate a zirconia prosthesis by working and short firing of a zirconia pre-sintered body at the dental clinic. For even easier fabrication of zirconia prostheses, Patent Literature 1 discloses a zirconia sintered body that is machinable even in a sintered state. The zirconia sintered body disclosed in Patent Literature 1 does not require post-processes such as firing, and enables the shape of the final prosthesis to be optimized for the oral cavity of a patient before delivery, in addition to greatly reducing the fabrication time of prosthesis.

The superior characteristic of the machinable zirconia sintered body disclosed in Patent Literature 1 is that the zirconia sintered body is machinable in a sintered state while maintaining strength and other properties suited for dental use. Firing of a zirconia molded body or a pre-sintered body into a sintered body is typically a one-step process that maintains the workpiece for about 2 hours at the firing temperature. However, in Patent Literature 1, the sintered body is produced by two stages of firing, and the appropriate retention time at the firing temperature is stated to be at least 20 hours. That is, a problem with the machinable zirconia sintered body disclosed in Patent Literature 1 is that, while the machinable zirconia sintered body enables a reduction of prosthesis fabrication time in places such as the dental clinic, its production at the factory is highly laborious and costly.

CITATION LIST

Patent Literature

Patent Literature 1: JP 2015-127294 A

SUMMARY OF INVENTION

Technical Problem

There accordingly is a need for more convenient fabrication of a machinable zirconia composite sintered body that is machinable in a sintered state while maintaining properties suited for dental use.

Accordingly, an object of the present invention is to provide a method that enables fabrication of a machinable zirconia composite sintered body that is machinable in a sintered state while maintaining properties (particularly, translucency and mechanical strength) suited for dental use, in a shorter time than it is possible with conventional methods.

Solution to Problem

The present inventors conducted intensive studies to find a solution to the foregoing issue, and found that a machinable zirconia composite sintered body that is machinable in a sintered state can be fabricated in a short time by using a raw material composition in which $ZrO_2$ predominantly comprises a monoclinic crystal system. The present invention was completed after further studies.

Specifically, the present invention includes the following.

[1] A method for producing a machinable zirconia composite sintered body, comprising the steps of:

fabricating a molded body with a raw material composition that comprises 78 to 95 mol% of $ZrO_2$ and 2.5 to 10 mol% of $Y_2O_3$, and 2 to 8 mol% of $Nb_2O_5$ and/or 3 to 10 mol% of $Ta_2O_5$, and in which $ZrO_2$ predominantly

comprises a monoclinic crystal system; and
sintering the molded body.

[2] The method for producing a machinable zirconia composite sintered body according to [1], wherein the raw material composition further comprises $TiO_2$, and $TiO_2$ is present in an amount of more than 0 part by mass and at most 3 parts by mass relative to total 100 parts by mass of $ZrO_2$, $Y_2O_3$, $Nb_2O_5$, and $Ta_2O_5$.

[3] The method for producing a machinable zirconia composite sintered body according to [1] or [2], wherein the raw material composition comprises 2 to 8 mol% of $Nb_2O_5$.

[4] The method for producing a machinable zirconia composite sintered body according to any one of [1] to [3], which further comprises pre-sintering the molded body after the fabrication of the molded body.

[5] The method for producing a machinable zirconia composite sintered body according to any one of [1] to [3], which comprises no pre-sintering of the molded body after the fabrication of the molded body.

[6] The method for producing a machinable zirconia composite sintered body according to any one of [1] to [5], wherein the sintering step comprises a main firing step having a maximum firing temperature of 1,400 to 1,650°C and a retention time at the maximum firing temperature of less than 2 hours.

[7] The method for producing a machinable zirconia composite sintered body according to [6], wherein the retention time at the maximum firing temperature in the main firing step is less than 30 minutes.

[8] A raw material composition that comprises 78 to 95 mol% of $ZrO_2$ and 2.5 to 10 mol% of $Y_2O_3$, and 2 to 8 mol% of $Nb_2O_5$ and/or 3 to 10 mol% of $Ta_2O_5$, and in which $ZrO_2$ predominantly comprises a monoclinic crystal system.

[9] The raw material composition according to [8], which further comprises $TiO_2$, and $TiO_2$ is present in an amount of more than 0 part by mass and at most 3 parts by mass relative to total 100 parts by mass of $ZrO_2$, $Y_2O_3$, $Nb_2O_5$, and $Ta_2O_5$.

[10] The raw material composition according to [8] or [9], wherein the fraction $f_m$ of the monoclinic crystal system in $ZrO_2$ calculated from the following mathematical expression (1) is 55% or more relative to a total amount of the monoclinic crystal system, and tetragonal and cubic crystal systems,

[Math. 1]

$$f_m(\%) = \frac{I_m(111) + I_m(11-1)}{I_m(111) + I_m(11-1) + I_t(111) + I_c(111)} \times 100 \qquad (1)$$

where $I_m(111)$ and $I_m(11-1)$ represent peak intensities of the (111) plane and (11-1) plane, respectively, of the monoclinic crystal system of zirconia, $I_t(111)$ represents the peak intensity of the (111) plane of the tetragonal crystal system of zirconia, and $I_c(111)$ represents the peak intensity of the (111) plane of the cubic crystal system of zirconia.

[11] The raw material composition according to any one of [8] to [10], which comprises 2 to 8 mol% of $Nb_2O_5$.

[12] A zirconia composite pre-sintered body that comprises 78 to 95 mol% of $ZrO_2$ and 2.5 to 10 mol% of $Y_2O_3$, and 2 to 8 mol% of $Nb_2O_5$ and/or 3 to 10 mol% of $Ta_2O_5$, and in which $ZrO_2$ predominantly comprises a monoclinic crystal system.

[13] The zirconia composite pre-sintered body according to [12], which further comprises $TiO_2$, and $TiO_2$ is present in an amount of more than 0 part by mass and at most 3 parts by mass relative to total 100 parts by mass of $ZrO_2$, $Y_2O_3$, $Nb_2O_5$, and $Ta_2O_5$.

[14] The zirconia composite pre-sintered body according to [12] or [13], which comprises 2 to 8 mol% of $Nb_2O_5$.

Advantageous Effects of Invention

According to the present invention, a method can be provided that enables fabrication of a machinable zirconia composite sintered body that is machinable in a sintered state while maintaining properties (particularly, translucency and mechanical strength) suited for dental use, in a shorter time than it is possible with conventional methods.

DESCRIPTION OF EMBODIMENTS

A method for producing a machinable zirconia composite sintered body of the present invention comprises the steps of: fabricating a molded body with a raw material composition that comprises 78 to 95 mol% of $ZrO_2$ and 2.5 to 10 mol% of $Y_2O_3$, and 2 to 8 mol% of $Nb_2O_5$ and/or 3 to 10 mol% of $Ta_2O_5$, and in which $ZrO_2$ predominantly comprises a monoclinic crystal system; and sintering the molded body. In the present specification, the upper limits and lower limits of numeric ranges (for example, ranges of contents of components, ranges of values calculated from components, and numeric ranges of properties) can be combined appropriately.

The improved machinability of a zirconia composite sintered body of the present invention is achieved by minimizing hardness, which is attained by maximizing fracture toughness and coarsening the microstructure with addition of $Nb_2O_5$ and/or $Ta_2O_5$ to conventional zirconia containing $Y_2O_3$. Further improvement of aesthetic quality is possible by maximizing sinter density with addition of appropriate oxides and with the use of HIP (Hot Isostatic Pressing).

The raw material composition for machinable zirconia composite sintered body used in the present invention comprises $ZrO_2$ and $Y_2O_3$, and $Nb_2O_5$ and/or $Ta_2O_5$. In view of achieving the translucency and strength suited for dental use, the $ZrO_2$ content is 78 to 95 mol%, preferably 79 to 94 mol%, more preferably 79 to 93 mol%, even more preferably 80 to 92 mol%. In view of achieving the translucency and strength suited for dental use, the $Y_2O_3$ content is 2.5 to 10 mol%, preferably 3 to 9 mol%, more preferably 3.5 to 8.5 mol%, even more preferably 4 to 8 mol%. In view of improving the machinability of the zirconia composite sintered body, the content of $Nb_2O_5$ of when it is contained is 2 to 8 mol%, preferably 3 to 7.5 mol%, more preferably 3.5 to 7 mol%, even more preferably 4 to 7 mol%. In view of improving the machinability of the zirconia composite sintered body, the content of $Ta_2O_5$ of when it is contained is 3 to 10 mol%, preferably 5.5 to 9.5 mol%, more preferably 5.5 to 9 mol%, even more preferably 6 to 9 mol%. In the present invention, the content of each component is a fraction relative to the total amount (100 mol%) of the components ($ZrO_2$, $Y_2O_3$, $Nb_2O_5$, and $Ta_2O_5$), and the total of these components does not exceed 100 mol%. For example, when the raw material composition contains $Nb_2O_5$ but does not contain $Ta_2O_5$, the content of each component ($ZrO_2$, $Y_2O_3$, or $Nb_2O_5$) means a fraction relative to the total amount of $ZrO_2$, $Y_2O_3$, and $Nb_2O_5$.

A certain preferred embodiment is, for example, a raw material composition for machinable zirconia composite sintered body that comprises 78 to 95 mol% of $ZrO_2$, 2.5 to 10 mol% of $Y_2O_3$, and 2 to 8 mol% of $Nb_2O_5$, and in which $ZrO_2$ predominantly comprises a monoclinic crystal system. The raw material composition of such an embodiment is preferably one that comprises 79 to 94 mol% of $ZrO_2$, 3 to 9 mol% of $Y_2O_3$, and 3 to 7.5 mol% of $Nb_2O_5$, and in which the fraction $f_m$ of the monoclinic crystal system in $ZrO_2$ calculated from mathematical expression (1) is at least 80% relative to the total amount of the tetragonal and cubic crystal systems.

In view of reducing the hardness of the sintered body, it is preferable that the raw material composition for machinable zirconia composite sintered body used in the present invention further comprise $TiO_2$. In view of achieving the translucency and strength suited for dental use while reducing hardness, the content of $TiO_2$ is preferably such that its mass ratio relative to total 100 parts by mass of $ZrO_2$, $Y_2O_3$, $Nb_2O_5$, and $Ta_2O_5$ is more than 0 part by mass and at most 3 parts by mass, more preferably more than 0.2 parts by mass and at most 2.5 parts by mass, even more preferably more than 0.5 parts by mass and at most 2 parts by mass.

The raw material composition for machinable zirconia composite sintered body used in the present invention may comprise an additive other than $ZrO_2$, $Y_2O_3$, $Nb_2O_5$, $Ta_2O_5$, or $TiO_2$, provided that the present invention can exhibit its effects. Examples of such additives include colorants (pigments, and complex pigments), fluorescent agents, $Al_2O_3$, $CeO_2$, and $SiO_2$. The additives may be used alone, or two or more thereof may be used as a mixture.

The pigment is, for example, an oxide (specifically, for example, $NiO$, $Cr_2O_3$) of at least one element selected from the group consisting of Ti, V, Cr, Mn, Fe, Co, Ni, Zn, Y, Zr, Sn, Sb, Bi, Ce, Pr, Sm, Eu, Gd, Tb, and Er, preferably an oxide of at least one element selected from the group consisting of Ti, V, Cr, Mn, Fe, Co, Ni, Zn, Y, Zr, Sn, Sb, Bi, Ce, Pr, Sm, Eu, Gd, and Tb, more preferably an oxide of at least one element selected from the group consisting of Ti, V, Cr, Mn, Fe, Co, Ni, Zn, Y, Zr, Sn, Sb, Bi, Ce, Sm, Eu, Gd, and Tb. Examples of the complex pigment include $(Zr,V)O_2$, $Fe(Fe,Cr)_2O_4$, $(Ni,Co,Fe)(Fe,Cr)_2O_4 \cdot ZrSiO_4$, and $(Co,Zn)Al_2O_4$. Examples of the fluorescent agents include $Y_2SiO_5{:}Ce$, $Y_2SiO_5{:}Tb$, $(Y,Gd,Eu)BO_3$, $Y_2O_3{:}Eu$, YAG:Ce, $ZnGa_2O_4{:}Zn$, and $BaMgAl_{10}O_{17}{:}Eu$.

It is required in the raw material composition for machinable zirconia composite sintered body used in the present invention that $ZrO_2$ predominantly comprise a monoclinic crystal system. In the present invention, "predominantly comprising a monoclinic crystal system" means that the fraction $f_m$ of the monoclinic crystal system of zirconia calculated from the mathematical expression (1) below is at least 50% relative to the total amount of all the crystal systems (monoclinic, tetragonal, and cubic) of the zirconia. In the raw material composition for machinable zirconia composite sintered body used in the present invention, the fraction $f_m$ of the monoclinic crystal system of $ZrO_2$ calculated from the mathematical expression (1) below is preferably 55% or more, more preferably 60% or more, even more preferably 70% or more, yet more preferably 75% or more, particularly preferably 80% or more, yet more particularly preferably 85% or more, most preferably 90% or more relative to the total amount of the monoclinic, tetragonal, and cubic crystal systems. The fraction $f_m$ of the monoclinic crystal system can be calculated from the mathematical expression (1) below, using peaks in an X-ray diffraction (XRD) pattern by CuKα radiation. The monoclinic crystal system as the predominant crystal system of $ZrO_2$ in the raw material composition comprising $Nb_2O_5$ and/or $Ta_2O_5$ is a potential contributing factor that shortens the sintering time while maintaining excellent translucency and mechanical strength. With the monoclinic crystal system being the predominant crystal system of $ZrO_2$ in the raw material composition, the raw material composition, when comprising $Nb_2O_5$ and/or $Ta_2O_5$, can have the properties that enable the zirconia sintered body to be machined while providing excellent machinability.

In the raw material composition for machinable zirconia composite sintered body used in the present invention, the peaks of tetragonal and cubic crystal systems may be essentially undetectable as crystal systems of $ZrO_2$. That is,

the fraction $f_m$ of the monoclinic crystal system may be 100%.
[Math. 2]

$$f_m(\%) = \frac{I_m(111) + I_m(11-1)}{I_m(111) + I_m(11-1) + I_t(111) + I_c(111)} \times 100 \qquad (1)$$

In mathematical expression (1), $I_m(111)$ and $I_m(11-1)$ represent the peak intensities of the (111) plane and (11-1) plane, respectively, of the monoclinic crystal system of zirconia, $I_t(111)$ represents the peak intensity of the (111) plane of the tetragonal crystal system of zirconia, and $I_c(111)$ represents the peak intensity of the (111) plane of the cubic crystal system of zirconia.

In the raw material composition for machinable zirconia composite sintered body used in the present invention, it is preferable that at least a part of the $ZrO_2$ crystals exist as the monoclinic crystal system by the presence of $Y_2O_3$, $Nb_2O_5$, and $Ta_2O_5$. That is, it is preferable that at least a part of $Y_2O_3$, $Nb_2O_5$, and $Ta_2O_5$ be not dissolved in zirconia as a solid solution. Whether a part of $Y_2O_3$, $Nb_2O_5$, and $Ta_2O_5$ is not dissolved in zirconia as a solid solution can be determined from an XRD pattern, for example. The presence of peaks derived from $Y_2O_3$, $Nb_2O_5$, and $Ta_2O_5$ in the XRD pattern of the raw material composition for machinable zirconia composite sintered body means the presence of $Y_2O_3$, $Nb_2O_5$, and $Ta_2O_5$ that are not dissolved in zirconia as a solid solution in the raw material composition. A peak derived from the stabilizer is basically not observable in the XRD pattern when $Y_2O_3$, $Nb_2O_5$, and $Ta_2O_5$ are fully dissolved as a solid solution. It is, however, possible, depending on the crystal state or other conditions of $Y_2O_3$, $Nb_2O_5$, and $Ta_2O_5$, that $Y_2O_3$, $Nb_2O_5$, or $Ta_2O_5$ is not dissolved in zirconia as a solid solution even when the XRD pattern does not show a peak of $Y_2O_3$, $Nb_2O_5$, or $Ta_2O_5$. When the crystal system of $ZrO_2$ is predominantly tetragonal and/or cubic and there is no peak attributed to $Y_2O_3$, $Nb_2O_5$, or $Ta_2O_5$ in the XRD pattern, $Y_2O_3$, $Nb_2O_5$, and $Ta_2O_5$ can be thought of having dissolved in $ZrO_2$ as a solid solution for the most part, basically completely. In the raw material composition for machinable zirconia composite sintered body used in the present invention, it is not required that $Y_2O_3$, $Nb_2O_5$, and $Ta_2O_5$ be fully dissolved in zirconia as a solid solution. In the present invention, "$Y_2O_3$, $Nb_2O_5$, and $Ta_2O_5$ dissolved as a solid solution" means that, for example, the elements (atoms) contained in $Y_2O_3$, $Nb_2O_5$, and $Ta_2O_5$ are dissolved in zirconia as a solid solution.

The raw material composition for machinable zirconia composite sintered body used in the present invention may be in a dry state, or in a state containing a liquid, or a state of being contained in a liquid. For example, the raw material composition may have a form of a powder, a granule or a granulated material, a paste, or a slurry. For example, $ZrO_2$, $Y_2O_3$, $Nb_2O_5$ and/or $Ta_2O_5$, and a binder may be pulverized and mixed wet in water with a known pulverizer (e.g., a ball mill) to form a slurry, and the slurry may be dried to granulate to form a granule. The binder may be added to a pulverized slurry after the slurry is formed by adding a primary powder of a mixture of $ZrO_2$, $Y_2O_3$, and $Nb_2O_5$ and/or $Ta_2O_5$ to water. The binder is not particularly limited, and known binders may be used (for example, (meth)acrylic binders, polyvinyl alcohol binders).

A method for producing a machinable zirconia composite sintered body of the present invention comprises the step of fabricating a molded body with the raw material composition. A method of production of a molded body of the present invention is not particularly limited, as long as the present invention can exhibit its effects. For example, a molded body can be obtained by press forming of the raw material composition (e.g., a granule or a granulated material). Any known method can be used for press forming of the granule or granulated material, and the method may include, for example, a uniaxial press forming step and/or a cold isostatic pressing (CIP) step. Preferably, the uniaxial press forming step may be a process in which the raw material composition is filled into a pressure mold (die) of a desired size, and is uniaxially pressed by applying pressure with an upper and a lower punch. Here, the applied pressure is optimized as appropriate according to the size, open porosity, water absorbency, and biaxial flexural strength desired for the molded body, and the particle size of the raw material composition. The applied pressure is typically 10 MPa to 1,000 MPa. By increasing the applied molding pressure of the method, the molded body produced can have tighter voids, allowing a smaller open porosity to be set.

A method for producing a machinable zirconia composite sintered body of the present invention may further comprise the step of pre-sintering the molded body to obtain a zirconia composite pre-sintered body, after the fabrication of the molded body. The zirconia composite pre-sintered body can be fabricated by firing (i.e., pre-sintering) the molded body at a temperature that does not sinter the raw material composition forming the molded body (pre-sintering step). In order to ensure block formation, the pre-sintering temperature is, for example, preferably 800°C or more, more preferably 900°C or more, even more preferably 950°C or more. For increased dimensional accuracy, the firing temperature is, for example, preferably 1,200°C or less, more preferably 1,150°C or less, even more preferably 1,100°C or less. That is, the preferred firing temperature is 800°C to 1,200°C in a method for producing a zirconia composite pre-sintered body of the present invention. Presumably, such a firing temperature produces a machinable zirconia composite pre-sintered body in which $ZrO_2$ predominantly comprises a monoclinic crystal system. The content of each component in the zirconia composite pre-sintered body is the same as in the raw material composition. In certain embodiments, the method for producing a machinable zirconia composite sintered body comprises no pre-sintering of the molded body.

In a method for producing a machinable zirconia composite sintered body of the present invention, the molded body or pre-sintered body may be a molded body or pre-sintered body having a predetermined shape. For example, the molded body or pre-sintered body may have a disc (circular disc) shape, a cuboidal shape, or a shape of a dental product (for example, a shape of a crown). The pre-sintered body includes dental products (for example, a prosthesis having a shape of a crown) produced by working of a pre-sintered zirconia disc by a CAD/CAM (Computer-Aided Design/Computer-Aided Manufacturing) system.

A method for producing a machinable zirconia composite sintered body of the present invention comprises the step of sintering the molded body. A method for producing a machinable zirconia composite sintered body of another embodiment comprises the step of sintering the pre-sintered body obtained in the pre-sintering step. The main firing (sintering) of the molded body or pre-sintered body may use a common furnace for dental zirconia. The furnace for dental zirconia may be a commercially available product. Examples of such commercially available products include Noritake KATANA® F-1N and Noritake KATANA® F-2 (both are products from SK Medical Electronics Co., Ltd.). The retention time holding the molded body or pre-sintered body in a furnace for dental zirconia is preferably 1 minute to 30 hours. Preferably, the sintering process has a maximum firing temperature of 1,400 to 1,650°C, though the temperature of main firing is not particularly limited. In the case of short main firing, the retention time holding the molded body or pre-sintered body in the furnace is preferably less than 30 minutes, more preferably at most 20 minutes, even more preferably at most 15 minutes at the maximum firing temperature.

The main firing (sinter) step in a method for producing a machinable zirconia composite sintered body of the present invention comprises not only a firing step under ordinary pressure or no applied pressure, but a firing step using a high-temperature pressing process such as HIP (Hot Isostatic Pressing). Firing under ordinary pressure or no applied pressure may be followed by firing by a high-temperature pressing process such as HIP. The machinable zirconia composite sintered body can have increased translucency and strength with HIP. In certain embodiments, the main firing step in the method for producing a machinable zirconia composite sintered body comprises no high-temperature pressing process such as HIP.

Examples of dental prostheses that can be produced by a method for producing a machinable zirconia composite sintered body of the present invention include crown restorations such as inlays, onlays, veneers, crowns, and bridges. Other examples include abutment teeth, dental posts, dentures, denture bases, and implant parts (fixtures and abutments). Preferably, for example, a commercially available dental CAD/CAM system is used for milling. Examples of such a CAD/CAM system include the CEREC system manufactured by Dentsply Sirona Dental Systems Inc., and the KATANA® system manufactured by Kuraray Noritake Dental Inc.

A method for producing a machinable zirconia composite sintered body of the present invention can be used also in applications other than dental use. Examples of such applications include production of electronic materials (such as sealing materials, and materials for forming laminates), and common general-purpose composite material members, for example, such as architectural parts, and components of electrical appliances, home appliances, and toys.

The present invention encompasses combinations of the foregoing features, provided that the present invention can exhibit its effects with such combinations made in various forms within the technical idea of the present invention.

EXAMPLES

The following describes the present invention in greater detail by way of Examples. It should be noted that the present invention is in no way limited by the following Examples, and various changes may be made by a person with ordinary skill in the art within the technical idea of the present invention. In the following Examples and Comparative Examples, "average particle diameter" means average primary particle diameter, and can be determined by a laser diffraction scattering method. Specifically, the average particle diameter can be measured by volume using a laser diffraction particle size distribution measurement device (SALD-2300, manufactured by Shimadzu Corporation) with a 0.2% sodium hexametaphosphate aqueous solution used as dispersion medium.

Preparation of Raw Material Composition

Examples 1 to 9

For preparation of a raw material composition of each Example, commercially available powders of $ZrO_2$, $Y_2O_3$, $Nb_2O_5$, and $TiO_2$ were mixed in the proportions shown in Table 1, and water was added to prepare a slurry. The slurry was then pulverized and mixed wet with a ball mill until the average particle diameter reached 0.13 μm or less. After adding a binder to the pulverized slurry, the slurry was dried with a spray drier to prepare a granule. The granule was used as a raw material composition for the production of a molded body, as described below. The $TiO_2$ content is 1 part by mass relative to total 100 parts by mass of $ZrO_2$, $Y_2O_3$, and $Nb_2O_5$.

Comparative Examples 1 to 3

For preparation of a raw material composition of each Comparative Example, commercially available powders of $ZrO_2$, $Y_2O_3$, and $Nb_2O_5$ were mixed in the proportions shown in Table 1, and water was added to prepare a slurry. The slurry was then pulverized and mixed wet with a ball mill until the average particle diameter reached 0.13 $\mu$m or less. After pulverization, the slurry was dried with a spray drier, and the resulting powder was fired at 1,200°C for 10 hours to prepare a powder (primary powder). Thereafter, water was added to the primary powder to prepare a slurry, and the slurry was pulverized and mixed wet with a ball mill until the average particle diameter reached 0.13 $\mu$m or less. After adding a binder to the pulverized slurry, the slurry was dried with a spray drier to prepare a granule (secondary powder). The granule was used as a raw material composition for the production of a molded body, as described below.

Preparation of Molded body

For each Example and Comparative Example, separate samples were prepared for translucency and strength evaluation and for machinability evaluation, as follows. To prepare a sample for translucency and strength evaluation, the raw material composition was charged into a cylindrical mold of about 15 mm diameter in such an amount that the machinable zirconia composite sintered body after sintering has a thickness of 1.3 to 1.5 mm. The raw material composition was then subjected to primary pressing at a surface pressure of 300 kg/cm$^2$, using a uniaxial pressing machine. The molded body after primary pressing was formed into a sample molded body by CIP performed at 1,700 kg/cm$^2$ for 5 minutes. Separately, the raw material composition was charged into a mold having about 20 mm × 20 mm inside dimensions to prepare a sample for machinability evaluation. Here, the raw material composition was charged in such an amount that the machinable zirconia composite sintered body after sintering has a thickness of 12 to 13 mm. The raw material composition was then subjected to primary pressing at a surface pressure of 300 kg/cm$^2$, using a uniaxial pressing machine. The molded body after primary pressing was formed into a sample molded body by CIP performed at 1,700 kg/cm$^2$ for 5 minutes.

Preparation of Zirconia Composite Pre-Sintered Body

The molded body was fired at 1,000°C for 2 hours (pre-sintering step) to obtain a zirconia composite pre-sintered body, using a furnace (Noritake KATANA® F-1, manufactured by SK Medical Electronics Co., Ltd.) (Examples 7 to 9).

Preparation of Zirconia Composite Sintered Body

The molded body (Examples 1 to 6 and Comparative Examples 1 to 3) or the zirconia composite pre-sintered body (Examples 7 to 9) was fired at the firing temperature (maximum firing temperature) and with the retention time shown in Table 1 to obtain a specimen of machinable zirconia composite sintered body, using a furnace (Noritake KATANA® F-1, manufactured by SK Medical Electronics Co., Ltd.)

Confirmation of Predominant Crystal System of Raw Material Composition or Zirconia Composite Pre-Sintered Body

For each Example and Comparative Example, an XRD pattern was measured for the raw material composition or zirconia composite pre-sintered body for machinable zirconia composite sintered body to confirm the predominant crystal system of $ZrO_2$, using CuK$\alpha$ radiation. The results are presented in Table 1 and Table 2. The crystal system of $ZrO_2$ was 100% monoclinic in all of the raw material compositions of Examples 1 to 6. The crystal system of $ZrO_2$ was also 100% monoclinic in all of the zirconia composite pre-sintered bodies of Examples 7 to 9.

Evaluation of Translucency of Zirconia Composite Sintered Body

The specimen of the machinable zirconia composite sintered body of each Example and Comparative Example was polished from both sides at #600 to prepare a zirconia composite sintered body having a thickness of 1.2 mm, and the translucency was evaluated using the following method (n = 3). Translucency was measured with a Crystaleye (a dental color-analysis device manufactured by Olympus Corporation; a 7-band LED light source). First, a first L* value was obtained by measuring an L* value of the L*a*b* color system (JIS Z 8781-4:2013 Color Measurements - Part 4: CIE 1976 L*a*b* color space) for a specimen against a white background (underlay) (the opposite side of the specimen from the measurement device is white). Secondly, from the same specimen used for the measurement of first L* value, a second L* value was obtained by measuring an L* value of the L*a*b* color system against a black background (underlay) (the opposite side of the specimen from the measurement device is black).

In the present invention, translucency, denoted as $\Delta$L*, is the difference between a first L* value and a second L* value (a value after subtraction of a second L* value from a first L* value). Larger values of $\Delta$L* mean higher translucency, and smaller values of $\Delta$L* mean lower translucency. The black and white backgrounds (underlays) used for the chromaticity measurement may use the hiding-power test paper used for the measurement for coating in JIS K 5600-4-1:1999. Tables 1 and 2 show the result for each specimen as a mean value of $\Delta$L*.

Strength Evaluation of Zirconia Composite Sintered Body

The specimen of the machinable zirconia composite sintered body of each Example and Comparative Example was polished from both sides at #600 to prepare a zirconia composite sintered body having a thickness of 1.2 mm, and the biaxial flexural strength was measured using a universal testing machine (manufactured by Instron) with the crosshead speed set at 0.5 mm/min, according to ISO6872:2015 (n = 5). Tables 1 and 2 show the results as mean values. The specimen was determined as having passed the test when it had a strength of 600 MPa or more.

Machinability Evaluation of Zirconia Composite Sintered Body

The specimen for machinable zirconia composite sintered body of each Example and Comparative Example was attached to a metal jig, and was worked into a shape of a common front-tooth crown with a wet milling machine for dentistry (DWX-42W, manufactured by DGSHAPE) (n = 1). The specimen was evaluated as "Machinable" when it was possible to finish working without causing defects such as chipping. Tables 1 and 2 show the results, along with the work time.

[Table 1]

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Composition | Zr02 | 90 mol% | | | | | | | | |
| | Y203 | 5.5 mol% | | | | | | | | |
| | Nb205 | 4.5 mol% | | | | | | | | |
| | $TiO_2$ | - | | | 1 part by mass | | | - | | |
| Firing of raw material composition | | No firing | | | No firing | | | 1200°C× 10 h | | |
| Predominant crystal system of $ZrO_2$ in raw material composition | | Monoclinic | | | Monoclinic | | | Tetragonal | | |
| Firing temperature | | 1550°C | | | | | | | | |
| Retention time | | 20 h | 2 h | 15 min | 20 h | 2 h | 15 min | 20 h | 2 h | 15 min |
| Translucency △L* | | 10.9 | 11.3 | 10.4 | 10.2 | 10.4 | 10.1 | 10.5 | 8.1 | 5.3 |
| Strength (MPa) | | 654 | 623 | 603 | 702 | 674 | 634 | 689 | 566 | 325 |
| Machinability (work time) | | Machinable (29 min) | Machinable (26 min) | Machinable (30 min) | Machinable (31 min) | Machinable (33 min) | Machinable (29 min) | Machinable (28 min) | - | - |

[Table2]

| | | Example 7 | Example 8 | Example 9 |
|---|---|---|---|---|
| Composition | Zr02 | 90 mol% | | |
| | Y203 | 5.5 mol% | | |
| | Nb205 | 4.5 mol% | | |
| | $TiO_2$ | 1 part by mass | | |
| Firing of raw material composition | | No firing | | |
| Pre-sintering of molded body | | 1000°C × 2 h | | |
| Predominant crystal system of $ZrO_2$ in pre-sintered body | | Monoclinic | | |
| Firing temperature | | 1550°C | | |
| Retention time | | 20 h | 2 h | 15 min |
| Translucency ΔL* | | 10.5 | 10.3 | 10.2 |
| Strength (MPa) | | 681 | 665 | 643 |
| Machinability (work time) | | Machinable (30 min) | Machinable (29 min) | Machinable (32 min) |
| In Tables 1 and 2, "Firing of raw material composition" means firing to obtain a primary powder in raw material composition production process. | | | | |

In all of Examples 1 to 6, the crystal system of $ZrO_2$ in the raw material compositions was monoclinic, and there were no large fluctuations in the values of translucency and strength, regardless of the retention time at the firing temperature, whether it was 20 hours, 2 hours, or 15 minutes. The results confirmed that fabrication of machinable zirconia composite sintered bodies that show properties suited for dental use was indeed possible in a short time, despite the short retention time. Similarly, in all of Examples 7 to 9, the crystal system of $ZrO_2$ in the zirconia composite pre-sintered bodies was monoclinic, and there were no large fluctuations in the values of translucency and strength, regardless of the retention time at the firing temperature, whether it was 20 hours, 2 hours, or 15 minutes. The results confirmed that fabrication of machinable zirconia composite sintered bodies that show properties suited for dental use was indeed possible in a short time, despite the short retention time. The machinable zirconia composite sintered bodies obtained in Examples 1 to 9, despite the short firing time, maintained superior translucency and mechanical strength while having excellent machinability as a sintered body, contrary to the fact that zirconia sintered bodies are generally not easily machinable. In contrast, in Comparative Examples 1 to 3 corresponding to JP 2015-127294 A, the crystal system of $ZrO_2$ in the raw material compositions was tetragonal, and the values of translucency and strength greatly decreased with a decrease of retention time at the firing temperature, from 20 hours to 2 hours, and to 15 minutes. Only the Comparative Example 1 with a retention time of 20 hours showed properties usable for dental use, confirming that fabrication of machinable zirconia composite sintered bodies that show properties suited for dental use is not possible in a short time when the crystal system of $ZrO_2$ in the raw material composition is tetragonal.

The numeric ranges given in this specification should be construed such that all numerical values and ranges falling within the ranges specified herein are specifically recited in the specification, even in the absence of specific recitations.

INDUSTRIAL APPLICABILITY

A method for producing a machinable zirconia composite sintered body of the present invention can be suitably used in a variety of applications, including dental products for fabrication of articles such as dental prostheses.

**Claims**

1.  A method for producing a machinable zirconia composite sintered body, comprising the steps of:

   fabricating a molded body with a raw material composition that comprises 78 to 95 mol% of $ZrO_2$ and 2.5 to 10

mol% of $Y_2O_3$, and 2 to 8 mol% of $Nb_2O_5$ and/or 3 to 10 mol% of $Ta_2O_5$, and in which $ZrO_2$ predominantly comprises a monoclinic crystal system; and
sintering the molded body.

2. The method for producing a machinable zirconia composite sintered body according to claim 1, wherein the raw material composition further comprises $TiO_2$, and $TiO_2$ is present in an amount of more than 0 part by mass and at most 3 parts by mass relative to total 100 parts by mass of $ZrO_2$, $Y_2O_3$, $Nb_2O_5$, and $Ta_2O_5$.

3. The method for producing a machinable zirconia composite sintered body according to claim 1 or 2, wherein the raw material composition comprises 2 to 8 mol% of $Nb_2O_5$.

4. The method for producing a machinable zirconia composite sintered body according to any one of claims 1 to 3, which further comprises pre-sintering the molded body after the fabrication of the molded body.

5. The method for producing a machinable zirconia composite sintered body according to any one of claims 1 to 3, which comprises no pre-sintering of the molded body after the fabrication of the molded body.

6. The method for producing a machinable zirconia composite sintered body according to any one of claims 1 to 5, wherein the sintering step comprises a main firing step having a maximum firing temperature of 1,400 to 1,650°C and a retention time at the maximum firing temperature of less than 2 hours.

7. The method for producing a machinable zirconia composite sintered body according to claim 6, wherein the retention time at the maximum firing temperature in the main firing step is less than 30 minutes.

8. A raw material composition that comprises 78 to 95 mol% of $ZrO_2$ and 2.5 to 10 mol% of $Y_2O_3$, and 2 to 8 mol% of $Nb_2O_5$ and/or 3 to 10 mol% of $Ta_2O_5$, and in which $ZrO_2$ predominantly comprises a monoclinic crystal system.

9. The raw material composition according to claim 8, which further comprises $TiO_2$, and $TiO_2$ is present in an amount of more than 0 part by mass and at most 3 parts by mass relative to total 100 parts by mass of $ZrO_2$, $Y_2O_3$, $Nb_2O_5$, and $Ta_2O_5$.

10. The raw material composition according to claim 8 or 9, wherein the fraction $f_m$ of the monoclinic crystal system in $ZrO_2$ calculated from the following mathematical expression (1) is 55% or more relative to a total amount of the monoclinic crystal system, and tetragonal and cubic crystal systems,
[Math. 1

$$f_m(\%) = \frac{I_m(111) + I_m(11-1)}{I_m(111) + I_m(11-1) + I_t(111) + I_c(111)} \times 100 \qquad (1)$$

where $I_m(111)$ and $I_m(11\text{-}1)$ represent peak intensities of the (111) plane and (11-1) plane, respectively, of the monoclinic crystal system of zirconia, $I_t(111)$ represents the peak intensity of the (111) plane of the tetragonal crystal system of zirconia, and $I_c(111)$ represents the peak intensity of the (111) plane of the cubic crystal system of zirconia.

11. The raw material composition according to any one of claims 8 to 10, which comprises 2 to 8 mol% of $Nb_2O_5$.

12. A zirconia composite pre-sintered body that comprises 78 to 95 mol% of $ZrO_2$ and 2.5 to 10 mol% of $Y_2O_3$, and 2 to 8 mol% of $Nb_2O_5$ and/or 3 to 10 mol% of $Ta_2O_5$, and in which $ZrO_2$ predominantly comprises a monoclinic crystal system.

13. The zirconia composite pre-sintered body according to claim 12, which further comprises $TiO_2$, and $TiO_2$ is present in an amount of more than 0 part by mass and at most 3 parts by mass relative to total 100 parts by mass of $ZrO_2$, $Y_2O_3$, $Nb_2O_5$, and $Ta_2O_5$.

14. The zirconia composite pre-sintered body according to claim 12 or 13, which comprises 2 to 8 mol% of $Nb_2O_5$.

**EP 4 082 991 A1**

## INTERNATIONAL SEARCH REPORT

| | International application No. |
|---|---|
| | PCT/JP2020/048954 |

**A. CLASSIFICATION OF SUBJECT MATTER**
C04B 35/488(2006.01)i; A61C 5/70(2017.01)i; A61C 13/08(2006.01)i
FI: C04B35/488; A61C5/70; A61C13/08
According to International Patent Classification (IPC) or to both national classification and IPC

**B. FIELDS SEARCHED**

Minimum documentation searched (classification system followed by classification symbols)
C04B35/488; A61C5/70; A61C13/08

Documentation searched other than minimum documentation to the extent that such documents are included in the fields searched
Published examined utility model applications of Japan 1922–1996
Published unexamined utility model applications of Japan 1971–2021
Registered utility model specifications of Japan 1996–2021
Published registered utility model applications of Japan 1994–2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2018/056330 A1 (KURARAY NORITAKE DENTAL INC.) 29 March 2018 (2018-03-29) entire text, all drawings | 1-14 |
| A | WO 2009/001739 A1 (MURATA MANUFACTURING CO., LTD.) 31 December 2008 (2008-12-31) entire text, all drawings | 1-14 |
| A | JP 2005-133210 A (SNECMA MOTEURS) 26 May 2005 (2005-05-26) entire text | 1-14 |
| A | JP 61-242956 A (CORNING GLASS WORKS) 29 October 1986 (1986-10-29) entire text, all drawings | 1-14 |
| P, A | WO 2020/138316 A1 (KURARAY NORITAKE DENTAL INC.) 02 July 2020 (2020-07-02) entire text, all drawings | 1-14 |

☒ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 February 2021 (09.02.2021) | 22 February 2021 (22.02.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2020/048954 |

C (Continuation).    DOCUMENTS CONSIDERED TO BE RELEVANT

| Category* | Citation of document, with indication, where appropriate, of the relevant passages | Relevant to claim No. |
| --- | --- | --- |
| P, A | WO 2020/218541 A1 (KURARAY NORITAKE DENTAL INC.) 29 October 2020 (2020-10-29) entire text, all drawings | 1-14 |

Form PCT/ISA/210 (continuation of second sheet) (January 2015)

**INTERNATIONAL SEARCH REPORT**

Information on patent family members

International application No.

PCT/JP2020/048954

| Patent Documents referred in the Report | Publication Date | Patent Family | Publication Date |
|---|---|---|---|
| WO 2018/056330 A1 | 29 Mar. 2018 | EP 3517518 A1 whole document, whole drawing CN 109689593 A KR 10-2019-0047701 A | |
| WO 2009/001739 A1 | 31 Dec. 2008 | (Family: none) | |
| JP 2005-133210 A | 26 May 2005 | US 2007/0237971 A1 whole document EP 1522533 A1 FR 2860790 A1 CA 2481932 A1 | |
| JP 61-242956 A | 29 Oct. 1986 | US 5008221 A whole document, whole drawing EP 199459 A2 KR 10-1986-0008105 A CN 86102486 A | |
| WO 2020/138316 A1 | 02 Jul. 2020 | (Family: none) | |
| WO 2020/218541 A1 | 29 Oct. 2020 | (Family: none) | |

Form PCT/ISA/210 (patent family annex) (January 2015)

**REFERENCES CITED IN THE DESCRIPTION**

**Patent documents cited in the description**

- JP 2015127294 A